# EUROPEAN PATENT SPECIFICATION

(11) **EP 1 564 938 B1**
(45) Date of publication and mention of the grant of the patent: **11.10.2006**
(21) Application number: 05002976.8
(22) Date of filing: 11.02.2005
(51) Int. Cl.: H04L 12/56

(54) **A cost-based routing using backoff scheme**
Kostenbasierte Leitweglenkung mittels Benutzung eines Backoff Verfahrens
Routage basée sur le coût utilisant une procédure backoff

(30) Priority: 11.02.2004 US 543293 P; 11.01.2005 KR 2005002579
(43) Date of publication of application: 17.08.2005
(73) Proprietor: SAMSUNG ELECTRONICS CO., LTD., Suwon-si, Gyeonggi-do (KR); CITY UNIVERSITY OF NEW YORK (CUNY), New York, NY 10031 (US)
(72) Inventor: Park, Jong-hun, Yeongtong-gu, Suwon-si, Gyeonggi-do (KR); Lee, Myung-jong c/o Dept. of Elec. Engin. of Grad., New York 10031 (US); Liu, Yong c/o Dept. of Elec. Engin. of Grad.School, New York 10031 (US); Hu, Xuhui c/o Dept. of Elec. Engin. of Grad.School, New York 10031 (US)
(74) Representative: Grünecker, Kinkeldey, Stockmair & Schwanhäusser Anwaltssozietät

(56) References cited:
- US-A- 5 987 011
- US-A1- 2003 204 616
- DOUGLAS S. J. DE COUTO, DANIEL AGUAYO, JOHN BICKET AND ROBERT MORRIS: "A high-throughput path metric for multi-hop wireless routing" MOBICOM 03, PROCEEDINGS OF THE 9TH ANNUAL INTERNATIONAL CONFERENCE ON MOBILE COMPUTING AND NETWORKING, [Online] 14 September 2003 (2003-09-14), pages 134-146, XP002321201 SAN DIEGO, CA, USA ISBN: 1-58113-753-2 Retrieved from the Internet: URL:http://doi.acm.org/10.1145/938985.9390 00> [retrieved on 2005-03-14]

## Description

### CROSS-REFERENCED TO RELATED APPLICATIONS

This application claims the benefits of US Provisional Application No. 60/543, 293, filed on February 11, 2004, and Korean Patent Application No. 2005-2579, filed on January 11, 2005, in the Korean Intellectual Property Office, the disclosures of which are incorporated herein in their entirety.

### BACKGROUND

### Field

The disclosed teachings relate to routing, and more particularly, to a technique for routing which is capable of discovering an optimal route by use of a backoff scheme. A backoff for the backoff scheme is calculated based on a route cost such as link quality.

### Description of the Related Art

An on-demand routing such as Ad hoc On Demand Distance Vector (AODV) routing is to discover a route effectively in an Ad hoc type wireless network. In AODV routing, when a source node wishes to send data to a destination node but contains no effective routing information, the source node floods the whole network with a Route REQest (RREQ) packet to discover possible routes leading to the destination node. In order to limit route discovery traffic, each intermediate node only rebroadcasts the first received RREQ packet and discards duplicated RREQ packets arriving subsequent to the first RREQ packet. Such an AODV routing is more suitable to a hop-count-based routing and guarantees the discovery of the shortest route.

However, the first received RREQ packet is not necessarily essential in discovering the optimal route in view of route cost. That is, in wireless networks, the hop-count is not the dominant route cost criterion any longer. Instead, link quality, energy efficiency, and security become the key factors to determine the route cost. In other words, the AODV routing is unsuitable to a cost-based routing which prefers the optimal route to the shortest route. This is because if the intermediate node only relays the first RREQ packet, the best route is very likely ignored.

FIG. I illustrates a network by way of an example, in which S denotes a source node and D denotes a destination node. Node F receives a first RREQ packet through route S-B-F, which is the shortest route between the node S and the node F. However, since the node B is located at transmission borders 10 and 20 of both the nodes S and F, link qualities in the routes S-B and B-F are very poor. Although the route S-C-E-F guarantees higher link quality, the RREQ packets transmitted through this route are discarded by the node F as the duplicated RREQ packets. Accordingly, the node S does not know the existence of the route S-C-E-F-G-D which is the optimal route in view of link qualities.

If all of the intermediate nodes are allowed to relay the duplicated RREQ packets, the probability that the optimal route is discovered increases. However, if most intermediate nodes have to rebroadcast the same RREQ packets for multiple times, control overhead inevitably increases. Accordingly, since all of the intermediate nodes relay the duplicated packets, the precious resources of wireless devices are depleted and normal data traffic is interfered with.
Douglas S. J. De Couto et al: "A high-throughput path metric for multi-hop wireless routing" Mobicom 03, Proceedings of the 9^{th} Annual International Conference on Mobile Computing and Networking, 14 September 2003, pages 134-146, relates to a high-throughput path metric for multi-hop wireless routing. The expected transmission count metric (EPX) is presented, which minimizes the expected total number of packet transmissions required to successfully deliver a packet to the ultimate destination. The metric overall goal is to choose routes with high end-to-end throughput. The ETX of a link is the predicted number of data transmissions required to send a packet over that link, including retransmissions. The ETX of a link is calculated using the forward and reverse delivery ratios of the link.

### SUMMARY

The disclosed teachings are aimed at solving some of the above-discussed problems in the related art. Accordingly, an aspect of the disclosed teachings is to provide a cost-based routing which ensures the discovery of optimal route with small control overhead

The above aspect is achieved by providing a routing method comprising receiving a first packet which is broadcasted for discovery of a route, calculating a first backoff of the first packet based on a route cost of the first packet, rebroadcasting the first packet if a second packet which is a duplicate of the first packet is not received within the first backoff, and if the second packet is received within the first backoff, calculating a second backoff of the second packet based on a route cost of the second packet, and rebroadcasting one of the first and the second packets as a result of comparing the first backoff and the second backoff.

The route cost may be calculated based on at least one of a link quality, an energy efficiency, and a security. The first and the second packets may be RREQ (Route Request) packets.

In the step of rebroadcasting one of the first and the second packets, if the second backoff is less than the first backoff, the second packet is rebroadcast after a pre-set time, and if the second backoff is grater than or equal to the first backoff, the first packet is rebroadcast after the first backoff. If a third backoff which is calculated by adding the second backoff to an arrival time of the first packet is greater than or equal to a current time, the pre-set time is the third backoff, and if the third backoff is less than the current time, the pre-set time is the most recent rebroadcastable time. The pre-set time is a time that is calculated by adding the second backoff to an arrival time of the second packet.

The routing method may further comprise, if the second packet is received after the first packet is rebroadcast, discarding the second packet. The routing method may further comprise receiving the second packet after the first packet is rebroadcast, if the second backoff is less than the first backoff, rebroadcasting the second packet and updating the first backoff to the second backoff, and if the second backoff time is grater than or equal to the first backoff, discarding the second packet.

Another aspect of the disclosed teachings is a computer network comprising a plurality of nodes including a source node, an intermediate node, a destination node and further comprising a timing calculator, a first packet and a second packet. The intermediate node is operable to receive the first packet, the first packet being broadcast by the network from the source node for discovering a route to the destination node. The timing calculator is operable to calculate a first backoff of the first packet based on a route cost of the first packet. The intermediate node is operable to rebroadcast the first packet if the second packet is not received within the first backoff, the second packet being a duplicate of the first packet. The timing calculator is further operable to calculate a second backoff of the second packet based on a route cost of the second packet if the second packet is received within the first backoff. The intermediate node is further operable to rebroadcast one of the first and the second packets as a result of comparing the first backoff and the second backoff.

### BRIEF DESCRIPTION OF THEDRAWINGS

The above aspect and other advantages of the disclosed teachings will be more apparent by describing an embodiment in greater detail with reference to the accompanying drawings, in which:

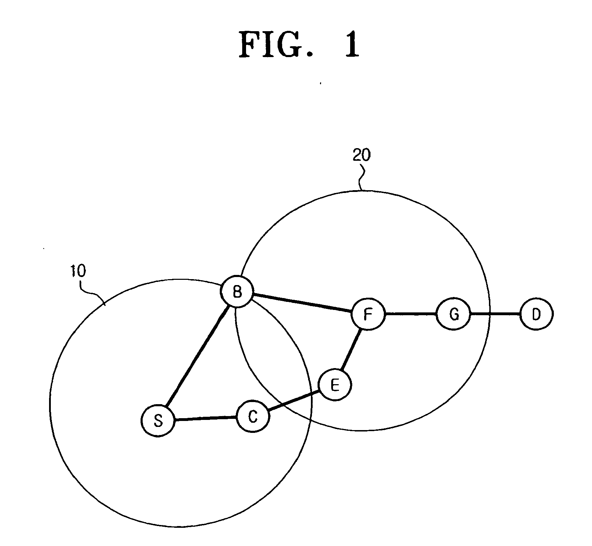

FIG. 1 is a view showing a network to explain a conventional routing;

FIGS. 2A and 2B are flowcharts illustrating a routing according to an embodiment of the disclosed teachings; and

FIGS. 3 and 4 are views to explain the routing according to the described embodiment.

### DESCRIPTION OF AN EXEMPLARY EMBODIMENT

Herein below, the disclosed teachings will now be described in greater detail with reference to the accompanying drawings.

A routing according to the disclosed teachings does not aim to rebroadcast only a first RREQ packet which is received at an intermediate node, but aims to rebroadcast one of the first RREQ packet and a duplicated RREQ packet arriving subsequent to the first RREQ packet that is transmitted through an optimal route in view of route cost.

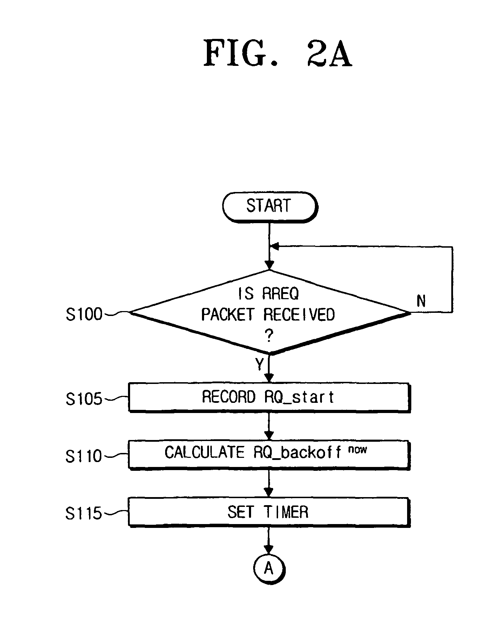

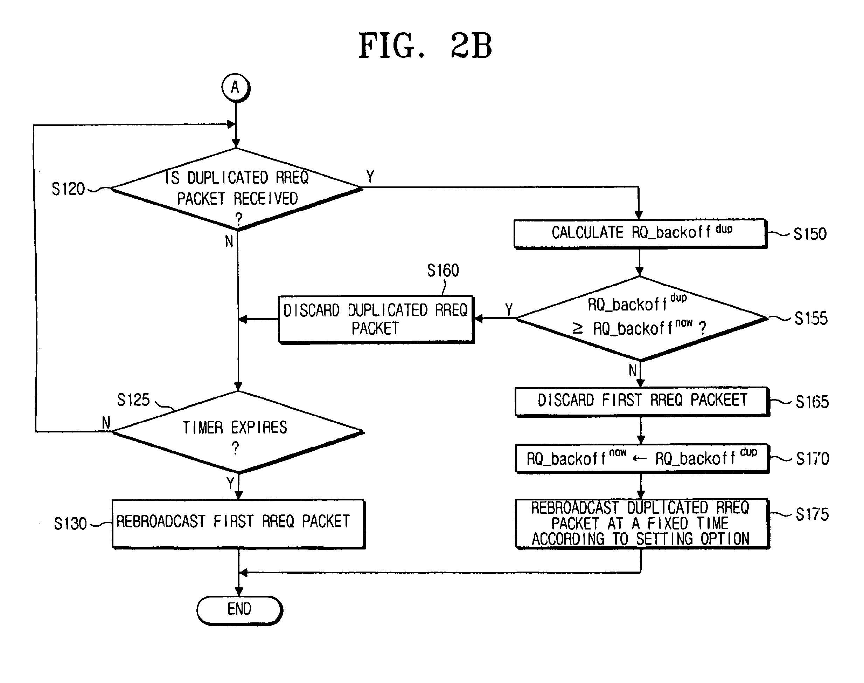

FIGS. 2A and 2B are flowcharts illustrating a routing procedure according to an embodiment of the disclosed teachings. Referring to FIG. 2A, when a certain intermediate node linked to a network receives a first RREQ packet (S100), it records an arrival time RQ_start of the first RREQ packet (S 105). After then, a RQ_backoff^{now} is calculated (S110). The RQ_backoff denotes a backoff that is established by the intermediate node based on a route cost incurred from a source node to the intermediate node, such as link quality, energy efficiency, and security. The RQ_backoff increases as the route cost increases. The RQ_backoff^{now} denotes a backoff of the first RREQ packet. If the RQ_backoff^{now} is calculated, a timer is set within intermediate node to expire after RQ_start +RQ_backoff^{now} (S115). The timing calculations are performed using a timing calculator.

Referring to FIG. 2B, if the node does not receive any second packet, which is a duplicated packet having the same data as the first packet, during a timer period (S120 and S125), the node rebroadcasts the first RREQ packet after RQ_start + RQ_backoff^{now} at which the timer expires (S130).

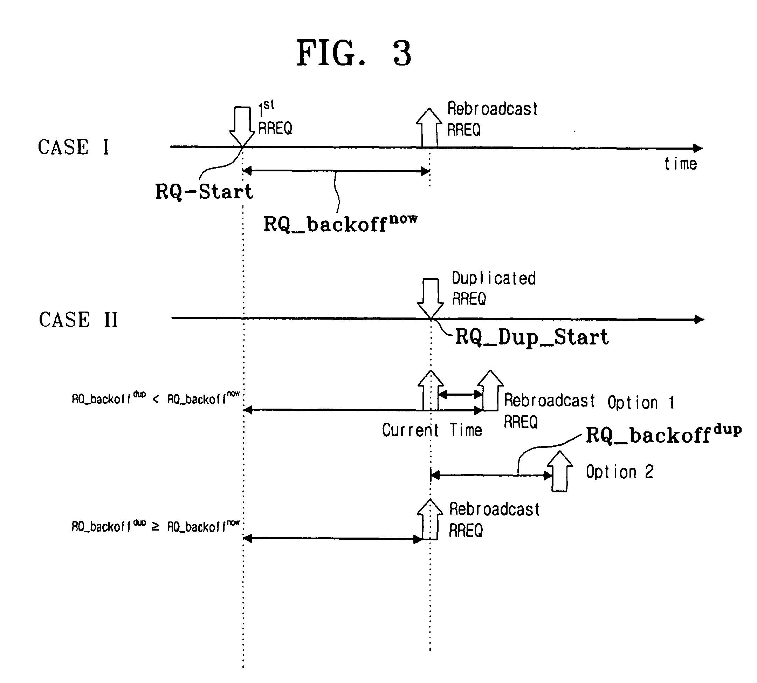

'CASE I' of FIG 3A illustrates the above-described case using a time axis. The arrow 1^{st} RREQ' indicates an arrival time of the first RREQ packet, and the arrow 'Rebroadcast RREQ' indicates the time when the first RREQ packet is rebroadcast. If any duplicated RREQ packet is not received until the RQ_start + RQ_backoff^{now}, the first RREQ packet is rebroadcast.

If the duplicated RREQ packet is received subsequent to the first RREQ packet during a period of the RQ_start + RQ_backoff^{now}, a RQ_backoff^{dup} is calculated (S 150). The RQ_backoff^{dup} denotes a backoff of the duplicated RREQ packet that is calculated based on the route cost.

The calculated RQ_backoff^{dup} is compared with the RQ_backoff^{now}. As a result of the comparison, if the RQ_backoff^{dup}≥RQ_backoff^{now}, the duplicated RREQ packet is discarded (S155 and S160), and the first RREQ packet is rebroadcast when the initially set timer expires (steps S125 and S130).

Meanwhile, if the RQ_backoff^{dup} < RQ_backoff^{now}, the first RREQ packet is discarded (S165), and the RQ_backoff^{now} is updated to the RQ_backoff^{dup} (S170). The duplicated RREQ packet is rebroadcast at the time that is determined according to a preestablished setting option. The setting option is established by one of the following two methods.

According to the first method, the RQ_start + RQ_backoff^{dup} is compared with a current time. If the RQ_start + RQ_backoff > the current time, the timer is re-set to the RQ_start + RQ_backoff_{dup}, and the duplicated RREQ packet is rebroadcast when the re-set timer expires. Otherwise, the duplicated RREQ packet is promptly rebroadcast.

According to the second method, the timer is re-set to RQ_DUP_start + RQ_backoft^{dup}, and when the re-set timer expires, the duplicate RREQ packet is rebroadcast. The RQ_DUP_start denotes an arrival time of the duplicated RREQ packet.

CASE II' of FIG 3A illustrates the above-described case using a time axis. The arrow 'Duplicated RREQ' indicates an arrival time of the duplicated RREQ packet, and the above-described first method is 'Option 1' and the second method is 'Option 2'.

Meanwhile, if the duplicated packet is received after the first RREQ packet is rebroadcast, it is processed through one of the following two procedures.

The first is to simply discard the duplicated RREQ packet.

According to the second procedure, the calculated RQ_backoff^{dup} is compared with the RQ_backoff^{now}. If the RQ-backoff^{dup}<RQ_backoff^{now}, which means the duplicated RREQ packet has a lower route cost than that of the first RREQ packet, the duplicated RREQ packet is promptly rebroadcast, and the RQ-backoff^{now} is updated to the RQ_backoff^{dup}. On the other hand, if RQ_backoff^{dup}≥RQ_backoff^{now}, which means the duplicate RREQ packet has a higher rout cost than that of the first RREQ packet, the duplicated RREQ packet is discarded.

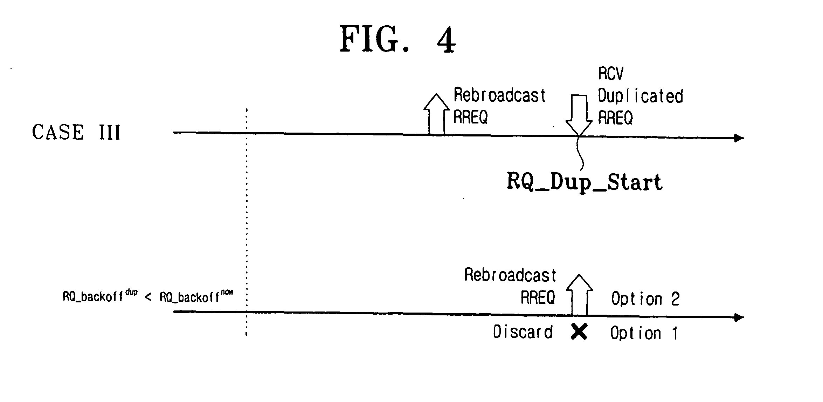

'CASE III' of FIG 4 illustrates the above-described case, in which 'Option I' denotes a case where the duplicated RREQ packet is discarded, and 'Option 2' denotes a case where the duplicated RREQ packet is promptly rebroadcast if the RQ_backoff^{dup}< RQ_backoff^{now}.

Since the routing according to the present invention does not rebroadcast only the first RREQ packet and rebroadcast the RREQ packet that is transmitted through an optimal route in view of the route cost, it ensure the discovery of the optimal route based on the route cost.

Also, since each intermediate node rebroadcast the RREQ packet within the established backoff, it can prevent transmission collisions of the RREQ packets and thus, control overhead can be reduced.

## Claims

1. A routing method comprising:
receiving (S100) a first packet, the first packet being broadcast for discovery of a route;
calculating (S110) a first backoff of the first packet based on a route cost of the first packet;
rebroadcasting (S130) the first packet if a second packet is not received within the first backoff, the second packet being a duplicate of the first packet; and
if the second packet is received within the first backoff, calculating (S150) a second backoff of the second packet based on a route cost of the second packet, and
rebroadcasting one of the first and the second packets as a result of comparing the first backoff and the second backoff.

2. The routing method as claimed in claim 1, wherein the route cost is calculated based on at least one of a link quality, an energy efficiency, and a security.

3. The routing method as claimed in claim 1, wherein the first and the second packets are Route Request, RREQ, packets.

4. The routing method as claimed in claim 1, wherein, during rebroadcasting one of the first and the second packets, if the second backoff is less than the first backoff, the second packet is rebroadcast after a pre-set time, and if the second backoff is grater than or equal to the first backoff, the first packet is rebroadcast after the first backoff.

5. The routing method as claimed in claim 4, wherein, if a third backoff which is calculated by adding the second backoff to an arrival time of the first packet is greater than or equal to a current time, the pre-set time is the third backoff, and if the third backoff is less than the current time, the pre-set time is a most recent rebroadcastable time.

6. The routing method as claimed in claim 4, wherein the pre-set time is a time that is calculated by adding the second backoff to an arrival time of the second packet.

7. The routing method as claimed in claim 1, further comprising:
if the second packet is received after the first packet is rebroadcast, discarding the second packet.

8. The routing method as claimed in claim 1, further comprising:
receiving the second packet after the first packet is rebroadcast;
if the second backoff is less than the first backoff, rebroadcasting the second packet and updating the first backoff to the second backoff; and
if the second backoff time is grater than or equal to the first backoff, discarding the second packet.

9. A computer network comprising:
a plurality of nodes including source node (S), an intermediate node, a destination node (D);
the network further comprising a timing calculator, a first packet and a second packet;
the intermediate node being operable to receive the first packet, the first packet being broadcast by the network from the source node (S) for discovering a route to the destination node (D);
the timing calculator being operable to calculate a first backoff of the first packet based on a route cost of the first packet;
the intermediate node being operable to rebroadcast the first packet if the second packet is not received within the first backoff, the second packet being a duplicate of the first packet,
the timing calculator being further operable to calculate a second backoff of the second packet based on a route cost of the second packet if the second packet is received within the first backoff, and
the intermediate node being further operable to rebroadcast one of the first and the second packets as a result of comparing the first backoff and the second backoff.

10. The computer network as claimed in claim 9, wherein the route cost is calculated based on at least one of a link quality, an energy efficiency, and a security.

11. The computer network as claimed in claim 9, wherein the first and the second packets are Route Request, RREQ, packets.

12. The computer network as claimed in claim 9, wherein,
the intermediate node is operable to rebroadcast the second packet if the second backoff is less than the first backoff, and
the intermediate node is operable to rebroadcast the first packet if the second backoff is greater than or equal to the first backoff.

13. The computer network as claimed in claim 12, wherein,
the timing calculator is operable to calculate a third backoff by adding the second backoff to an arrival time of the first packet,
the network is operable to set the pre-set time to be the third backoff if the third backoff is greater than or equal to a current time,
and the network is operable to set the pre-set time to be a most recent broadcastable time if the third backoff is less than the current time.

14. The computer network as claimed in claim 12, wherein the pre-set time is a time that is calculated by adding the second backoff to an arrival time of the second packet.

15. The computer network as claimed in claim 9 wherein the intermediate node is operable to discard the second packet if the second packet is received after the first packet is rebroadcast.

16. The computer network as claimed in claim 9, wherein,
the intermediate node is operable to receive the second packet after the first packet is rebroadcast;
the intermediate node is operable to rebroadcast the second packet and update the first backoff to the second backoff if the second backoff is less than the first backoff; and
the intermediate node is operable to discard the second packet if the second backoff time is grater than or equal to the first backoff.

## Patentansprüche

1. Ein Weiterleitungsverfahren umfassend:
Empfangen (S100) eines ersten Pakets, das erste Paket wird für das Entdecken eines Weges übertragen;
Berechnen (S110) eines ersten Backoff des ersten Pakets basierend auf den Wegekosten des ersten Pakets;
Wiederübertragen (S130) des ersten Pakets wenn ein zweites Paket nicht in dem ersten Backoff empfangen wurde, das zweite Paket ist ein Duplikat des ersten Pakets; und
wenn das zweite Paket in dem ersten Backoff empfangen wurde, Berechnen (S150) eines zweiten Backoff des zweiten Pakets basierend auf Wegekosten des zweiten Pakets und
Wiederübertragen des ersten oder zweiten Pakets als ein Resultat des Vergleichens des ersten Backoff und des zweiten Backoff.

2. Das Weiterleitungsverfahren wie in Anspruch 1, wobei die Wegekosten basierend auf Verbindungsqualität, Energieeffizienz oder Sicherheit berechnet werden.

3. Das Weiterleitungsverfahren wie in Anspruch 1, wobei das erste und das zweite Paket Route-Request-Pakete, RREQ, Pakete, sind.

4. Das Weiterleitungsverfahren wie in Anspruch 1, wobei, wenn während des Wiederübertragens des ersten oder zweiten Pakets das zweite Backoff kleiner als das erste Backoff ist wird das zweite Paket nach einer vorbestimmten Zeit wiederübertragen und wenn das zweite Backoff größer oder gleich dem ersten Backoff ist, wird des erste Paket nach dem ersten Backoff übertragen.

5. Das Weiterleitungsverfahren wie in Anspruch 4, wobei, wenn ein drittes Backoff, welches durch Addieren des zweiten Backoff zu einer Ankunftszeit des ersten Pakets berechnet wird, größer oder gleich einer laufenden Zeit ist, ist die vorbestimmte Zeit das dritte Backoff, und wenn das dritte Backoff kleiner als die laufende Zeit ist, ist die vorbestimmte Zeit eine letzte wiederübertragbare Zeit.

6. Das Weiterleitungsverfahren wie in Anspruch 4, wobei die vorbestimmte Zeit eine Zeit ist, welche durch Addieren des zweiten Backoff zu einer Ankunftszeit des zweiten Pakets berechnet wird.

7. Das Weiterleitungsverfahren wie in Anspruch 1, weiter beinhaltend:
Verwerfen des ersten Pakets, wenn das zweite Paket empfangen wird nachdem das erste Paket wiederholt übertragen wurde.

8. Weiterleitungsverfahren wie in Anspruch 1, weiter beinhaltend:
Empfangen des zweiten Pakets nachdem das erste Paket wiederholt übertragen wurde;
wenn das zweite Backoff kleiner als das erste Backoff ist, Wiederübertragen des zweiten Pakets und Aktualisieren des ersten Backoff mit dem zweiten Backoff; und
wenn das zweite Backoff größer oder gleich dem ersten Backoff ist, Verwerfen des zweiten Pakets.

9. Ein Rechnernetzwerk beinhaltend:
eine Vielzahl von Knoten umfassend einen Quellknoten (S), einen Zwischenknoten, einen Zielknoten (D);
das Netzwerk weiter beinhaltend einen Zeitkoordinierungsberechner, ein erstes Paket und ein zweites Paket;
der Zwischenknoten fähig das erste Paket zu empfangen, das erste Paket wird durch das Netzwerk von dem Quellknoten (S) für das Entdecken eines Weges zu dem Zielknoten (D) übertragen;
der Zeitkoordinierungsberechner fähig zum Berechnen eines ersten Backoff des ersten Pakets basierend auf Wegekosten des ersten Pakets;
der Zwischenknoten fähig zum Wiederübertragen des ersten Pakets wenn das zweite Paket nicht innerhalb des ersten Backoff empfangen wurde, das zweite Paket ist ein Duplikat des ersten Pakets;
der Zeitkoordinierungsberechner weiterhin fähig zum Berechnen eines zweiten Backoff des zweiten Pakets basierend auf Wegekosten des zweiten Pakets wenn das zweite Paket nicht innerhalb des ersten Backoff empfangen wurde; und
der Zwischenknoten weiterhin fähig zum Wiederübertragen des ersten oder des zweiten Pakets als Resultat des Vergleichens des ersten Backoff und des zweiten Backoff.

10. Das Rechnernetzwerk wie in Anspruch 9, wobei die Wegekosten basierend auf Verbindungsqualität, Energieeffizienz oder Sicherheit berechnet werden.

11. Das Rechnernetzwerk wie in Anspruch 9, wobei das erste und das zweite Paket Route-Request-Pakete, RREQ.Pakete, sind.

12. Das Rechnernetzwerk wie in Anspruch 9, wobei
der Zwischenknoten fähig ist das zweite Paket wieder zu übertragen wenn das zweite Backoff kleiner ist als der erste Backoff; und
der Zwischenknoten fähig ist das erste Paket wieder zu übertragen wenn das zweite Backoff größer oder gleich dem ersten Backoff ist.

13. Das Rechnernetzwerk wie in Anspruch 12, wobei
der Zeitkoordinierungsberechner fähig ist ein drittes Backoff zu berechnen durch Addieren des zweiten Backoff zu einer Ankunftszeit des ersten Pakets,
das Netzwerk fähig die vorbestimmte Zeit gleich dem dritten Backoff zu setzen wenn der dritte Backoff größer oder gleich einer laufenden Zeit ist,
und das Netzwerk fähig die vorbestimmte Zeit gleich einer letzten wiederübertragbaren Zeit zu setzen wenn das dritte Backoff kleiner als die laufende Zeit ist.

14. Das Rechnernetzwerk wie in Anspruch 12, wobei die vorbestimmt Zeit eine Zeit ist, welche durch Addieren des zweiten Backoff zu einer Ankunftszeit des zweiten Pakets berechnet wird.

15. Das Rechnernetzwerk wie in Anspruch 15, wobei der Zwischenknoten fähig ist das erste Paket zu verwerfen, wenn das zweite Paket empfangen wird nachdem das erste Paket wiederübertragen wurde.

16. Das Rechnernetzwerk wie in Anspruch 15, wobei
der Zwischenknoten fähig ist das zweite Pakets zu empfangen nachdem das erste Paket wiederübertragen wurde;
der Zwischenknoten fähig ist das zweite Paket wieder zu übertragen und das erste Backoff dem zweiten Backoff zu aktualisieren, wenn das zweite Backoff kleiner als das erste Backoff ist; und
der Zwischenknoten fähig ist das zweite Paket zu verwerfen, wenn das zweite Backoff größer oder gleich dem ersten Backoff ist.

## Revendications

1. Procédé de routage, comprenant les étapes consistant à:
recevoir (S100) un premier paquet, le premier paquet étant diffusé en vue de découvrir une voie d'acheminement;
calculer (S110) un premier délai d'attente du premier paquet en fonction d'un coût d'acheminement du premier paquet;
rediffuser (S 130) le premier paquet si un deuxième paquet n'est pas reçu dans les limites du premier délai d'attente, le deuxième paquet étant une copie du premier paquet; et
si le deuxième paquet est reçu dans les limites du premier délai d'attente, calculer (S150) un deuxième délai d'attente du deuxième paquet en fonction d'un coût d'acheminement du deuxième paquet, et
rediffuser l'un des premier et deuxième paquets en résultat d'une comparaison du premier délai d'attente au deuxième délai d'attente.

2. Procédé de routage selon la revendication 1, dans lequel le coût d'acheminement est calculé d'après au moins un paramètre parmi qualité de liaison, rendement énergétique et sécurité.

3. Procédé de routage selon la revendication 1, dans lequel les premier et deuxième paquets sont des paquets de requête de route, RREQ.

4. Procédé de routage selon la revendication 1, dans lequel, au cours de la rediffusion de l'un des premier et deuxième paquets, si le deuxième délai d'attente est inférieur au premier délai d'attente, le deuxième paquet est rediffusé après un temps prédéfini, et si le deuxième délai d'attente est supérieur ou égal au premier délai d'attente, le premier paquet est rediffusé après le premier délai d'attente:

5. Procédé de routage selon la revendication 4, dans lequel, si un troisième délai d'attente qui est calculé en additionnant le deuxième délai d'attente à un temps d'arrivée du premier paquet est supérieur ou égal à un temps courant, le temps prédéfini est le troisième délai d'attente, et si le troisième délai d'attente est inférieur au temps courant, le temps prédéfini est un temps de rediffusion possible le plus récent.

6. Procédé de routage selon la revendication 4, dans lequel le temps prédéfini est un temps qui est calculé en additionnant le deuxième délai d'attente à un temps d'arrivée du deuxième paquet.

7. Procédé de routage selon la revendication 1, comprenant en outre l'opération consistant à:
si le deuxième paquet est reçu après que le premier paquet a été rediffusé, abandonner le deuxième paquet.

8. Procédé de routage selon la revendication 1, comprenant en outre les opérations consistant à:
recevoir le deuxième paquet après que le premier paquet a été rediffusé;
si le deuxième délai d'attente est inférieur au premier délai d'attente, rediffuser le deuxième paquet et mettre à jour le premier délai d'attente sur le deuxième délai d'attente; et
si le deuxième délai d'attente est supérieur ou égal au premier délai d'attente, abandonner le deuxième paquet.

9. Réseau informatique, comprenant:
une pluralité de noeuds incluant un noeud source (S), un noeud intermédiaire, un noeud destinataire (D);
le réseau comprenant en outre un calculateur de temporisation, un premier paquet et un deuxième paquet;
le noeud intermédiaire étant utilisable pour recevoir le premier paquet, le premier paquet étant diffusé par le réseau à partir du noeud source (S) en vue de découvrir une voie d'acheminement jusqu'au noeud destinataire (D);
le calculateur de temporisation étant utilisable pour calculer un premier délai d'attente du premier paquet en fonction d'un coût d'acheminement du premier paquet;
le noeud intermédiaire étant utilisable pour rediffuser le premier paquet si le deuxième paquet n'est pas reçu dans les limites du premier délai d'attente, le deuxième paquet étant une copie du premier paquet;
le calculateur de temporisation étant en outre utilisable pour calculer un deuxième délai d'attente du deuxième paquet en fonction d'un coût d'acheminement du deuxième paquet si le deuxième paquet est reçu dans les limites du premier délai d'attente, et
le noeud intermédiaire étant en outre utilisable pour rediffuser l'un des premier et deuxième paquets en résultat d'une comparaison du premier délai d'attente au deuxième délai d'attente.

10. Réseau informatique selon la revendication 9, dans lequel le coût d'acheminement est calculé d'après au moins un paramètre parmi qualité de liaison, rendement énergétique, et sécurité.

11. Réseau informatique selon la revendication 9, dans lequel les premier et deuxième paquets sont des paquets de requête de route, RREQ.

12. Réseau informatique selon la revendication 9, dans lequel:
le noeud intermédiaire est utilisable pour rediffuser le deuxième paquet si le deuxième délai d'attente est inférieur au premier délai d'attente, et
le noeud intermédiaire est utilisable pour rediffuser le premier paquet si le deuxième délai d'attente est supérieur ou égal au premier délai d'attente.

13. Réseau informatique selon la revendication 12, dans lequel:
le calculateur de temporisation est utilisable pour calculer un troisième délai d'attente en additionnant le deuxième délai d'attente à un temps d'arrivée du premier paquet,
le réseau est utilisable pour régler le temps prédéfini sur le troisième délai d'attente si le troisième délai d'attente est supérieur ou égal à un temps courant,
et le réseau est utilisable pour régler le temps prédéfini sur un temps de rediffusion possible le plus récent si le troisième délai d'attente est inférieur au temps courant.

14. Réseau informatique selon la revendication 12, dans lequel le temps prédéfini est un temps qui est calculé en additionnant le deuxième délai d'attente à un temps d'arrivée du deuxième paquet.

15. Réseau informatique selon la revendication 9, dans lequel le noeud intermédiaire est utilisable pour abandonner le deuxième paquet si le deuxième paquet est reçu après que le premier paquet a été rediffusé.

16. Réseau informatique selon la revendication 9, dans lequel:
le noeud intermédiaire est utilisable pour recevoir le deuxième paquet après que le premier paquet a été rediffusé;
le noeud intermédiaire est utilisable pour rediffuser le deuxième paquet et mettre à jour le premier délai d'attente sur le deuxième délai d'attente si le deuxième délai d'attente est inférieur au premier délai d'attente, et
le noeud intermédiaire est utilisable pour abandonner le deuxième paquet si le deuxième délai d'attente est supérieur ou égal au premier délai d'attente.
